# EUROPÄISCHE PATENTANMELDUNG

(11) **EP 4 636 324 A1**
(43) Veröffentlichungstag der Anmeldung: **22.10.2025**
(21) Anmeldenummer: 25165894.4
(22) Anmeldetag: 25.03.2025
(51) Int. Cl.: F24F 1/02, B01D 46/00, B01D 46/10, F24F 13/20, F24F 13/28, F24H 9/02, F24F 1/035

(54) **WÄRMEPUMPE MIT OPTIMIERTER FILTERANORDNUNG**

(30) Priorität: 15.04.2024 DE 102024110552
(71) Anmelder: Stiebel Eltron GmbH & Co. KG, 37603 Holzminden (DE)
(72) Erfinder: Benning, Markus, 37671 Höxter (DE); Oxe, Christian, 34474 Diemelstadt (DE); SCHAUMLÖFFEL, Michael, 37671 Höxter (DE); Dell, Roman, 37671 Höxter (DE); STEMMER, Tobija, 37627 Stadtoldendorf (DE); Furchner, Florian, 37632 Eschershausen (DE); Dreyer, Jens, 37632 Eschershausen (DE)

(57) **Zusammenfassung**

Die Erfindung betrifft eine Wärmepumpe mit einem Zuluftfilter in einem Zuluft-Lüftungskanal (11) und einem Abluftfilter in einem Abluft-Lüftungskanal (12), wobei der Zuluftfilter und der Abluftfilter in voneinander isolierten Kammern(14, 15) eines in einem von außen zugänglichen Einführ-/Entnahme-Kanal der Wärmepumpe gelagerten Filter-Schieberkasten (10) enthalten sind, der mit einer der Kammern (14, 15) den Zuluft-Lüftungskanal (11) und mit der anderen der Kammern (14, 15) den Abluft-Lüftungskanal (12) quert, und der zum Austauschen des Zuluftfilters und des Abluftfilters aus der Wärmepumpe herausziehbar angeordnet ist.

## Beschreibung

Die Erfindung betrifft eine Wärmepumpe mit einem Zuluftfilter in einem Zuluft-Lüftungskanal und einem Abluftfilter in einem Abluft-Lüftungskanal.

Eine Wärmepumpe, etwa in Gestalt einer Luft-Wasser-Wärmepumpe saugt die Umgebungsluft mittels eines integrierten Ventilators an und leitet sie in einen Verdampfer. Im Verdampfer wird die Wärme an ein Kältemittel übertragen, welches verdampft. Mittels des Verdichters wird es auf ein höheres Druck- und Temperaturniveau gebracht. Die Zuluft- und die Abluftströmung der Wärmepumpe wird mittels mehrerer Filter, Zuluft- und Abluftfilter gereinigt.

Wie oft die Filter der Wärmepumpe gewechselt werden müssen, hängt von verschiedenen Faktoren ab, wie z. B. der Qualität der Außenluft, in der die Wärmepumpe installiert ist, und den spezifischen Empfehlungen des Herstellers. Im Allgemeinen wird jedoch empfohlen, die Filter alle drei bis sechs Monate zu überprüfen und gegebenenfalls zu reinigen oder auszutauschen.

Die regelmäßige Kontrolle der Filter ist wichtig, um sicherzustellen, dass er nicht verstopft oder verschmutzt ist. Verstopfte Filter können den Luftdurchfluss behindern und die Leistung der Wärmrückgewinnung beeinträchtigen. Wenn die Filter sichtbare Verschmutzungen oder Ablagerungen aufweisen und/oder sich nur schwer durchblasen lässt, ist dies ein deutliches Zeichen dafür, dass er ausgetauscht werden muss.

Es ist auch ratsam, die Filter häufiger zu überprüfen, wenn die Wärmepumpe in einer Umgebung mit hoher Luftverschmutzung, Allergenbelastung oder erhöhter Staub- und Schmutzpartikelproduktion betrieben wird. In solchen Fällen kann es erforderlich sein, die Filter alle zwei bis drei Monate zu überprüfen oder zu reinigen, um ihre Wirksamkeit zu erhalten.

Einige Wärmepumpenmodelle sind mit einer Filterüberwachungssensor ausgestattet, der den Zustand der Filters überwacht und eine Meldung ausgibt, wenn ein Austausch erforderlich ist. In diesen Fällen kann sich der Betreiber auf die Anzeige zum Filterwechsel verlassen,

Es ist wichtig, die Anzeichen für die Notwendigkeit eines Filtertauschs zu erkennen und die Filter regelmäßig zu überprüfen, um sicherzustellen, dass sie ordnungsgemäß funktionieren. Nachfolgend einige häufige Anzeichen dafür, dass die Filter ausgetauscht werden müssen:
Sichtbare Verschmutzung: Wenn die Filter sichtbare Verschmutzungen, Verunreinigungen oder Ablagerungen aufweisen, ist dies ein deutlicher Hinweis darauf, dass sie ausgetauscht werden müssen. Eine Ansammlung von Staub, Schmutz, Pollen oder Haaren kann die Filterleistung beeinträchtigen und den Luftdurchfluss einschränken.

Eingeschränkter Luftstrom: Wenn festgestellt wird, dass der Luftstrom im Raum oder die Luftmenge in den Lüftungsschlitzen abnimmt, kann dies ein Anzeichen dafür sein, dass die Filter verstopft sind. Verstopfte Filter können den Luftstrom behindern und die Effizienz der Wärmerückgewinnung beeinträchtigen.

Allergiesymptome oder schlechte Raumluftqualität: bei Auftreten von Allergiesymptomen, wie Niesen, Husten oder einer verstopften Nase, kann dies darauf hindeuten, dass die Filter Partikel wie Pollen, Staub oder andere Allergene nicht mehr effektiv entfernen. Auch eine Verschlechterung der Raumluftqualität kann darauf hindeuten, dass die Filter nicht mehr richtig funktionieren und ausgetauscht werden sollten.

Erhöhter Energieverbrauch: Auch wenn der Energieverbrauch plötzlich gestiegen ist, kann dies auf einen verschmutzten oder verstopften Filter hindeuten. Ineffiziente Filter können den Luftdurchfluss einschränken und dazu führen, dass die Wärmepumpe mehr Energie benötigt, um die gewünschte Heiz- oder Kühlleistung zu erzielen.

Unangenehme Gerüche oder Geräusche: Verstopfter oder Verschmutzter Filter können zu unangenehmen Gerüchen führen, da sich Schmutzpartikel ansammeln und in der Wärmepumpe ablagern können. Außerdem können verstopfte Filter ungewöhnliche Geräusche verursachen, z. B. lautes Brummen oder Pfeifen, da die Wärmepumpe versucht, gegen den eingeschränkten Luftstrom anzukämpfen.

Bisher waren die Filter getrennt in Grobfilter und Feinfilter an unterschiedlichen Positionen des Gerätes, im Zuluft- und Abluftstrom vorhanden.

Eine Feinfilterung des Bypass-Volumenstroms ist durch diese Anordnung bislang nicht möglich, wobei auch eine Automatisierung des Bypass-Volumenstroms in der Form nicht realisierbar war.

Eine Aufgabe der Erfindung besteht deshalb darin, eine Wärmepumpe mit einer Filteranordnung auszustatten, die einfach und effektiv austauschbar ist und die auch den Bypass-Volumenstrom in die Filterung integriert.

Diese Aufgabe wird durch den Gegenstand des Anspruchs 1 gelöst. Die rückbezogenen Ansprüche betreffen zweckmäßige und erfinderische Weiterbildungen dieser Erfindung.

Die Erfindung schafft demnach eine Wärmepumpe mit einem Zuluftfilter in einem Zuluft-Lüftungskanal und einem Abluftfilter in einem Abluft-Lüftungskanal, wobei der Zuluftfilter und der Abluftfilter in voneinander isolierten Kammern eines in einem von außen zugänglichen Einführ-/Entnahme-Kanal der Wärmepumpe gelagerten Filter-Schieberkasten enthalten sind, der mit einer der Kammern den Zuluft-Lüftungskanal und mit der anderen der Kammern den Abluft-Lüftungskanal quert, und der zum Austauschen des Zuluftfilter und des Abluftfilters aus der Wärmepumpe herausziehbar angeordnet ist.

Mit anderen Worten schafft die Erfindung in Gestalt eines Schiebers einen Filterkasten, für Wärmepumpen und allgemein für Lüftungssysteme, der alle notwendigen Filter aufnimmt und den Austausch aller Luftfilter in einem Arbeitsgang ermöglicht. Vorliegend wird dieser Austauschfilterkasten als Filter-Schieberkasten bezeichnet.

Vorteilhafterweise ist der Abluftfilter in eingeschobener Stellung des Filter-Schieberkastens in der in Einschubrichtung vorne liegenden Kammer so positioniert, dass der Abluftstrom über einen internen Luft/Luft-Wärmeaustauscher und alternativ über einen Bypass-Weg strömt. Der Zuluftfilter für die Zuluft ist hingegen in der hinteren Kammer des ausziehbaren Filter-Schieberkastens zum Filtern des Zuluftstroms angeordnet.

Der Zuluftfilter umfasst bevorzugt einen Grobfilter und einen Feinfilter in "Sandwichbauweise", wobei die Sandwichbauweise der Filter in der Kammer des Filter-Schieberkasten so positioniert ist, dass zuerst der Grobfilter und dann der Feinfilter von der Luftströmung durchsetzt wird. Hintergrund ist, dass mit dem (auswaschbaren) Grobfilter gröbere Verschmutzungen abgehalten werden können und damit die Standzeit des Feinfilters erhöht wird.

Eine notwendige Voraussetzung für die Strömungsführung im Zusammenhang mit dem Filter-Schieberkasten ist hierfür die Abdichtung der unterschiedlichen Lüftungskanäle / Lüftungsbereiche des Wärmetauschers untereinander.

Um die Luftströmungsbereiche zu trennen, kommt ein Dichtungskonzept zum Einsatz, bei dem die bauliche Trennstelle der Luftströmungen durch eine Innenwand, welche vom Filter-Schieberkasten durchsetzt ist, mittels einer "Dichtlappenabdichtung" abgedichtet wird.

Im Prinzip ist jedoch jedes Lappenmaterial in Gestalt eines luftdichten flexiblen Materials denkbar, wie etwa Leder, bevorzugt in geölter oder gefetteter Form, verschiedene Gummiarten oder Kunstfasern.

Das Prinzip der Abdichtung entspricht dem gängigen Verschluss offener Stellen im Bauraum, wobei sich das Dichtlappenmaterial, eng eingeklemmt zwischen vorderem und hinterem Schiebersegment positioniert und geringfügig an allen vier Seiten des Schiebers im Schnitt um wenige Zehntel bis Millimeter, je nach Anwendung, heraussteht und gegen die bauliche Umrandung des Schiebers, in diesem Fall ein im EPS eingelassener Metallrahmen, abdichtet.

Mit anderen Worten sieht die Erfindung vor, dass die aneinander angrenzenden Wände der beiden Kammern des Filter-Schieberkastens umlaufend mit einer von den Wänden vorstehenden Dichtlippe umschlossen sind, die mit der Wandung des Lüftungskanals dicht im Eingriff steht, in dem der Filter-Schieberkasten angeordnet ist, um die den Lüftungskanal an unterschiedlichen Positionen durchsetzende Zuluft und Abluft getrennt durch die Zuluft- und Abluftfilter im Filter-Schieberkasten zu leiten.

Bei der Dichtlippe um den Rand einer Platte handelt es sich bevorzugt um eine Platte, die zwischen den aneinander angrenzenden Wänden der beiden Kammern des Filter-Schiebekastens im Klemmsitz angeordnet ist.

Eine hierzu alternative Dichtungsanordnung sieht wie folgt aus: die beiden Kammern des Filter-Schieberkastens weisen unterschiedlich große Querschnitte auf, so dass die Trennwand der in Einschubrichtung hinteren Kammer des Filterschieberkastens mit einem umlaufenden Rand über die Trennwand der vorderen Kammer übersteht, die einen Durchbruch einer Wand die den Zuluftkanal vom Abluftkanal trennt, wobei eine Dichtlippe auf dem umlaufenden Rand der Trennwand der hinteren Kammer dichtend im Eingriff mit der Zuluft-/Abluft-Trennwand steht.

Anhand des in den Zeichnungsfiguren dargestellten Ausführungsbeispiels ist die Erfindung mit weiteren Einzelheiten erläutert.
- Fig. 1: zeigt die Anordnung des erfindungsgemäß vorgesehenen Filter-Lüfterschiebers in seiner Arbeitsstellung in der Luftströmungsumgebung eines Luft-Luft-Wärmetauschers,
- Fig. 2: zeigt eine Ansicht der beiden Kammern des Filter-Schieberkastens im Bereich ihrer Trennwände, zwischen denen eine Dichtung angeordnet ist, die umlaufend über die Trennwände vorsteht,
- Fig. 3: zeigt eine Ansicht des Lüftungsbereichs des Wärmetauschers mit den jeweiligen Strömungsverlaufen, und
- Fig. 4: zeigt eine zu Fig. 2 alternative Dichtungsanordnung.

Identische und baugleiche Teile sind mit identischen Bezugsziffern versehen. Die Figuren können teilweise vereinfachte oder schematische Darstellungen enthalten. Verschiedene Ansichten gleicher Teile können unterschiedlich skaliert sein.

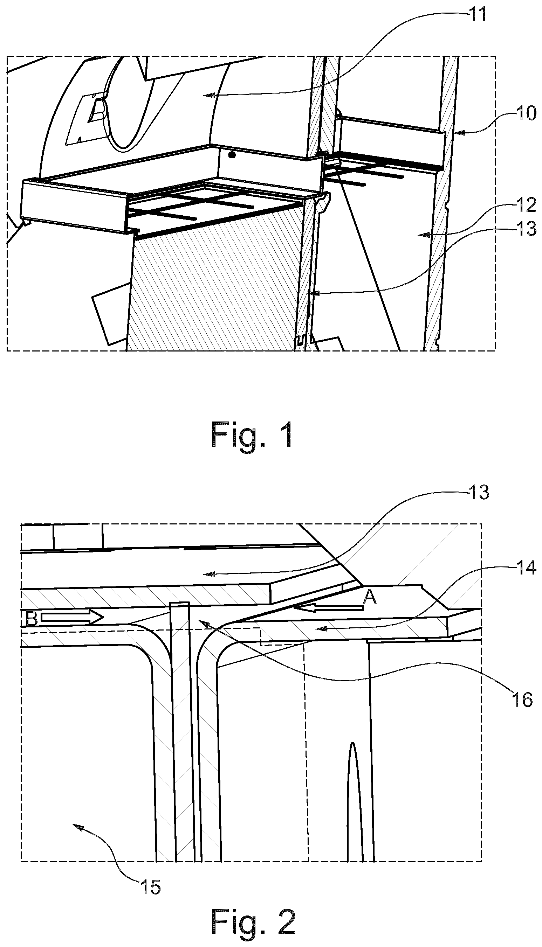

In Fig. 1 ist ein Ausschnitt einer Luft-Wasser-Wärmepumpe mit einem Zuluftfilter in einem Zuluft-Lüftungskanal 11 und einem Abluftfilter in einem Abluft-Lüftungskanal 12 gezeigt, der vom Zuluft-Lüftungskanal 11 durch eine Lüftungskanal-Trennwand 13 getrennt ist. Die Filter sind in einem Filter-Schieberkasten 10 positioniert, der in einem Einführ-/Entnahmekanal der Wärmepumpe angeordnet und von außen zugänglich ist, um bestimmungsgemäß in seine Arbeitsstellung geschoben bzw. aus dem Einführ-/Entnahmekanal entnommen bzw. herausgezogen zu werden. Wie in Fig. 2 gezeigt, umfasst der Filter-Schieberkasten 10 zwei Kammern 14 und 15, in denen der Zuluftfilter und der Abluftfilter so angeordnet sind, dass sie mit dem Zuluftlüftungskanal bzw. dem Abluftlüftungskanal kommunizieren.

Der Abluftfilter ist in eingeschobener Stellung des Filter-Schieberkastens 10 in der in Einschubrichtung vorne liegenden Kammer 15 so positioniert ist, dass der Abluftstrom über einen nicht gezeigten internen Luft/Luft-Wärmeaustauscher und alternativ über einen ebenfalls nicht gezeigten Bypass-Weg strömt. Der Zuluftfilter für die Zuluft ist in der hinteren Kammer 14 des ausziehbaren Filter-Schieberkastens 10 zum Filtern des Zuluftstroms angeordnet.

Der Zuluftfilter umfasst einen Grobfilter und einen Feinfilter in "Sandwichbauweise", wobei zuerst der Grobfilter und dann der Feinfilter von der Luftströmung beaufschlagt wird.

In einem vorteilhaften Ausführungsbeispiel umfasst der Abluftfilter einen Grobfilter und einen Feinfilter in "Sandwichbauweise", wobei zuerst der Grobfilter und dann der Feinfilter von der Luftströmung beaufschlagt wird.

Gemäß einem vorteilhaften Gedanken ist bei der Sandwichbauwese der Filter in der jeweiligen Kammer 14, 15 so positioniert, dass zuerst der Grobfilter durchströmt ist. Das gilt vorteilhaft für den Abluftfilter und den Zuluftfilter, soweit vorgesehen.

Wie ferner aus Fig. 2 hervorgeht, sind die aneinander angrenzenden Wände der beiden Kammern 14 und 5 umlaufend mit einer von diesen Wänden vorstehenden Dichtlippe 16 umschlossen die mit der Wandung des Lüftungskanals dicht im Eingriff steht, in dem der Filter-Schieberkasten 10 zu liegen kommt, um die den Lüftungskanal an unterschiedlichen Positionen durchsetzende Zuluft (Pfeil B) und Abluft (Pfeil A) getrennt durch die Zuluft- und Abluftfilter im Filter-Schieberkasten 10 zu leiten. Die Dichtlippe 16 bildet den überstehenden Rand einer plattenförmigen Dichtung, die zwischen den aneinandergrenzenden Wänden der Kammern 14, 15 angeordnet ist.

Die Dichtlippe 16 ist mittels Schraubverbindung zwischen den Kammern eingeklemmt und dichtet rund um den Filter-Schieberkasten ab. Fig. 2 zeigt einen Schnitt durch die Kammern 14, 15 des Filter-Schieberkastens 10 und die Dichtlippe 16, mit dem Dichtbereich oberhalb des Filter-Schieberkastens, abdichtend den rechten Wärmepumpenbereich vom linken Wärmepumpenbereich für die voneinander zu trennenden Luftschichten.

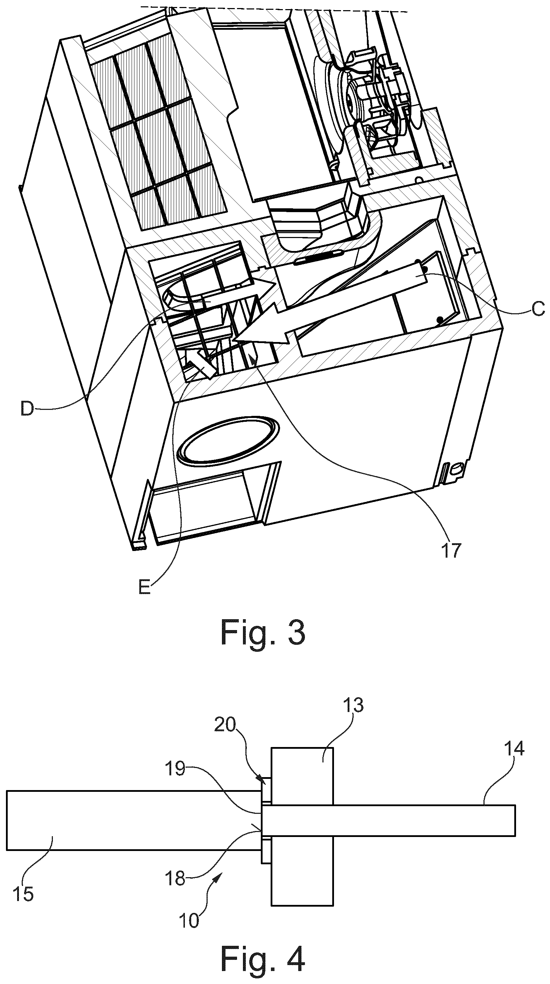

Fig. 3 zeigt einen Horizontalschnitt durch den Lüftungsbereich der Wärmepumpe. Sichtbar ist die Trennwand zwischen den Luftströmungsbereichen, wobei im Filter-Schieberkasten 10 in seiner vollständig eingeschobenen Stellung, der Zuluftstrom durch den Wärmetauscher also auch durch den Bypass-Kanal verläuft, um gefiltert zu werden. Der betreffende Filter ist hier nicht dargestellt, lediglich ein Gitter 17 des Filter-Schieberkastens 10 ist zu sehen, damit der untere Bereich der Wärmepumpe abgebildet werden kann.

In Fig. 3 bezeichnet der große Pfeil C den Zuluftstrom durch den Zuluftfilter, während der mittelgroße Pfeil D den Zuluftstrom unterhalb des Zuluftfilters, also in gefiltertem Zustand in Richtung des Bypass-Kanals zeigt. Der kleine Pfeil E bezeichnet den Zuluftstrom unterhalb des Zuluftfilters in gefiltertem Zustand in Richtung des Luft/Luft Wärmeaustauschers strömend.

Fig. 4 zeigt eine zu Fig. 2 alternative Abdichtung des Filter-Schieberkastens 10 gegenüber der Wärmetauscherumgebung.

In Fig. 4 weisen die beiden Kammern des Filter-Schieberkastens unterschiedlich große Querschnitte auf, so dass die Stirnwand der in Einschubrichtung vorderen Kammer des Filter-Schiebekastens mit einem umlaufenden Rand über die Stirnwand der hinteren Kammer übersteht, die einen Durchbruch einer Wand, die den Zuluftkanal vom Abluftkanal trennt, wobei eine Dichtung 20 auf dem umlaufenden Rand der Trennwand der hinteren Kammer dichtend im Eingriff mit der Zuluft-/Abluft-Trennwand steht.

### Bezugszeichenliste

- 10: Filter-Schieberkasten
- 11: Zuluft-Lüftungskanal
- 12: Abluft-Lüftungskanal
- 13: Lüftungskanal-Trennwand
- 14: hinten liegende Kammer
- 15: vorne liegende Kammer
- 16: Dichtlippe
- 17: Gitter
- 18: Kopplungsstirnwand
- 19: Kopplungsstirnwand
- 20: Dichtung

## Patentansprüche

1. Wärmepumpe mit einem Zuluftfilter in einem Zuluft-Lüftungskanal (11) und einem Abluftfilter in einem Abluft-Lüftungskanal (12), wobei der Zuluftfilter und der Abluftfilter in voneinander isolierten Kammern( 14, 15) eines in einem von außen zugänglichen Einführ-/Entnahme-Kanal der Wärmepumpe gelagerten Filter-Schieberkasten (10) enthalten sind, der mit einer der Kammern (14, 15) den Zuluft-Lüftungskanal (11) und mit der anderen der Kammern (14, 15) den Abluft-Lüftungskanal (12) quert, und der zum Austauschen des Zuluftfilters und des Abluftfilters aus der Wärmepumpe herausziehbar angeordnet ist.

2. Wärmepumpe nach Anspruch 1, wobei der Abluftfilter in eingeschobener Stellung des Filter-Schieberkastens (10) in der vorne liegenden Kammer (15) so positioniert ist, dass der Abluftstrom über einen internen Luft/Luft Wärmeaustauscher und über einen Bypass-Weg strömt.

3. Wärmepumpe nach Anspruch 2, wobei der Zuluftfilter für die Zuluft in der hinteren Kammer (14) des ausziehbaren Filter-Schieberkastens (10) zum Filtern des Zuluftstroms angeordnet ist.

4. Wärmepumpe nach einem der Ansprüche 1 bis 3, wobei der Zuluftfilter und der Abluftfilter einen Grobfilter und einen Feinfilter in "Sandwichbauweise" umfassen, wobei der Filter in der jeweiligen Kammer des Filter-Schieberkasten (10) so positioniert ist, dass zuerst der Grobfilter und dann der Feinfilter von der Luftströmung durchsetzt wird.

5. Wärmepumpe nach einem de Ansprühe 1 bis 4, wobei die aneinander angrenzenden Stirnwände (18,19) der beiden Kammern (14, 15) umlaufend mit einer von den Wänden vorstehenden Dichtlippe (16) umschlossen sind, die mit der Wandung des Lüftungskanals dicht im Eingriff steht, in dem der Filter-Schieberkasten (10) angeordnet ist, um die den Lüftungskanal an unterschiedlichen Positionen durchsetzende Zuluft und Abluft getrennt durch die Zuluft- und Abluftfilter im Filter-Schieberkasten (10) zu leiten.

6. Wärmepumpe nach Anspruch 5, wobei es sich bei der Dichtlippe (16) um den Rand einer Platte handelt, die zwischen den aneinander angrenzenden Stirnwänden (18) der beiden Kammern (14, 15) des Filter-Schiebekastens (10) im Klemmsitz angeordnet ist.

7. Wärmepumpe nach einem der Ansprüche 1 bis 4, wobei die beiden Kammern (14, 15) des Filter-Schieberkastens (10) unterschiedlich große Querschnitte aufweisen, so dass die Stirnwand der in Einschubrichtung vorderen Kammer (15) des Filter-Schiebekastens (10) mit einem umlaufenden Rand über die Stirnwand (19) der hinteren Kammer (14) übersteht, die einen Durchbruch einer Wand (13), die den Zuluftkanal (11) vom Abluftkanal (12) trennt, wobei eine Dichtlippe (20) auf dem umlaufenden Rand der Trennwand der hinteren Kammer (15) dichtend im Eingriff mit der Zuluft-/Abluft-Trennwand (13) steht.

8. Wärmepumpe nach einem der Ansprüche 1 bis 7, wobei der Filter-Schieberkasten einen rechteckigen Querschnitt aufweist.
